# EUROPÄISCHE PATENTSCHRIFT

(11) **EP 3 705 317 B1**
(45) Veröffentlichungstag und Bekanntmachung des Hinweises auf die Patenterteilung: **12.07.2023**
(21) Anmeldenummer: 20160834.6
(22) Anmeldetag: 04.03.2020
(51) Int. Cl.: B60G 3/14, B60G 9/02, B60G 11/27, B60G 21/00, B62D 61/12, B62D 7/04, B60B 11/08

(54) **ACHSBAUGRUPPE FÜR EIN SCHWERLASTFAHRZEUG UND SCHWERLASTFAHRZEUG MIT WENIGSTENS EINER DERARTIGEN ACHSBAUGRUPPE**
AXLE ASSEMBLY FOR A HEAVY LOAD VEHICLE AND HEAVY LOAD VEHICLE WITH AT LEAST ONE SUCH AXLE ASSEMBLY
MODULE D'ESSIEUX POUR UN POIDS LOURD ET POIDS LOURD DOTÉ D'AU MOINS UN TEL MODULE D'ESSIEU

(30) Priorität: 06.03.2019 DE 102019203018
(43) Veröffentlichungstag der Anmeldung: 09.09.2020
(73) Patentinhaber: Goldhofer AG, 87700 Memmingen (DE)
(72) Erfinder: HÄFELE, Horst, 87727 Babenhausen (DE); MERKEL, Felix, 87700 Memmingen (DE)
(74) Vertreter: Weickmann & Weickmann PartmbB

(56) Entgegenhaltungen:
- DE-A1- 2 713 331
- DE-U1-202005 020 640
- US-A- 3 049 361
- US-A1- 2010 133 764

## Beschreibung

Die Erfindung betrifft eine Achsbaugruppe gemäß dem Oberbegriff des Anspruchs 1.

Die Erfindung betrifft ferner ein Schwerlastfahrzeug mit wenigstens einer derartigen Achsbaugruppe.

Es sei an dieser Stelle darauf hingewiesen, dass das Schwerlastfahrzeug, für das die erfindungsgemäße Achsbaugruppe konstruktiv auszulegen ist, sowohl ein motorisch angetriebenes Schwerlastfahrzeug als auch ein gezogenes Schwerlastfahrzeug sein kann, beispielsweise ein Schwerlastanhänger oder wie es im Anhang XI zur EG-Richtlinie 2007-46-EG in der Fassung vom 15.07.2011 heißt ein "Anhänger für Schwerlasttransporte", also gemäß der dort gegebenen Definition dieses Begriffs ein Fahrzeug der Klasse O4 für den Transport von teilbaren und unteilbaren Ladungen (beispielsweise Baumaschinen, Behälter und Rotorflügel von Windkraftanlagen), die aufgrund ihrer Abmessungen Geschwindigkeits- und Verkehrsbeschränkungen unterliegen, wobei hierzu auch modulare Anhänger zählen, unabhängig von der Anzahl der Achsen und Module. Ferner ist festzuhalten, dass auch bei den motorisch angetriebenen Schwerlastfahrzeugen nicht jede der Achsbaugruppen motorisch angetrieben zu sein braucht.

Darüber hinaus werden nur solche Fahrzeuge als Schwerlastfahrzeuge im Sinne der vorliegenden Erfindung angesehen, bei denen die Last, für die jede einzelne Achsbaugruppe ausgelegt zu sein hat, einen Wert von mindestens 4 t, vorzugsweise mindestens 5 t, noch bevorzugter mindestens 6 t aufweist.

Derartige Schwerlastfahrzeuge weisen in Abhängigkeit von der jeweils zu transportierenden Last häufig eine große Anzahl von Achsbaugruppen auf, welche zumindest teilweise als lenkbare Achsbaugruppen ausgeführt sein können. Darüber weisen die Achsbaugruppen derartiger Schwerlastfahrzeuge häufig einen Achsausgleich auf, welcher auch als "Niveau-Regulierung" bezeichnet werden kann, um eine Ladefläche des Schwerlastfahrzeugs, welche zur Aufnahme einer zu transportierenden Last eingerichtet ist, in einem horizontalen Zustand zu halten oder für einen Be- und/oder Entladevorgang absenken, anheben und/oder gewünschtenfalls schrägstellen zu können. Darüber hinaus kann es beispielsweise während eines Transportvorgangs erforderlich sein, dass die Ladehöhe, d.h. die Höhe einer Ladefläche des Schwerlastfahrzeugs bezogen auf eine Radaufstandsebene der Achsbaugruppe des Schwerlastfahrzeugs, reguliert werden muss, um bestimmte gesetzliche Vorschriften einhalten oder ein sich auf einer Transportstrecke befindliches Hindernis überwinden bzw. passieren zu können. Hierdurch kann beispielsweise einer Tunneldurchfahrt mit begrenzter Bauhöhe oder dergleichen weiteren Szenarien Rechnung getragen werden.

Zur Realisierung eines entsprechenden Achsausgleichs sind in der Vergangenheit, insbesondere im Bereich von Schwerlastanwendungen, in der Regel Achsbaugruppen mit hydraulisch betätigten Achsausgleichsystemen eingesetzt worden, welche einen oder mehrere druckbeaufschlagte Hydraulikkreise aufweisen und mit einem Betriebsfluid, wie z.B. Hydrauliköl, betrieben werden. Bei einer gattungsgemäßen Achsbaugruppe lässt sich demnach der Schwenkwinkel der an dem Drehgestell um eine im Wesentlichen horizontal verlaufende Schwenkachse schwenkbar angebrachten Schwinge derart verändern, dass beispielsweise die für das jeweilige Szenario gewünschte Ladehöhe des Schwerlastfahrzeugs erzielt wird. Bei derartigen hydraulisch betätigten Achsausgleichsystemen muss unter anderem kontinuierlich auf höchste Dichtheit der betreffenden Hydraulik bzw. des jeweiligen Hydraulikkreises mit dessen zugehörigen Komponenten geachtet werden, da ein unkontrollierter Austritt von Hydrauliköl in die Umgebung stets mit einer potentiellen Beeinträchtigung der Umwelt bzw. auf öffentlich genutzten Straßen mit potentiellen Gefahren für andere Verkehrsteilnehmer einhergehen kann. Zusätzlich muss das verwendete Hydrauliköl aufgrund seines Alterungsverhaltens im Rahmen von Wartungsmaßnahmen regelmäßig ausgetauscht werden.

Darüber hinaus weisen derartige hydraulisch regulierbare Achsbaugruppen bzw. Schwerlastfahrzeuge mit derartigen Achsbaugruppen unter anderem aufgrund der hierfür erforderlichen Hydraulikkomponenten, welche häufig für Betriebsdrücke von bis zu 250 bar ausgelegt sein müssen, entsprechend hohe Eigengewichte auf, was der an gewerblich genutzte Schwerlastfahrzeuge gestellten Forderung nach einer Maximierung der Nutzlast bei, je nach Anzahl der Achsbaugruppen, vorgegebener zulässiger Achslast und/oder vorgegebenem zulässigen Gesamtgewicht des Schwerlastfahrzeugs entgegensteht.

Im Rahmen der fahrdynamischen Auslegung ist ferner zu beachten, dass Feder-Dämpfer-Einheiten hydraulisch regulierbarer Achsbaugruppen zur Realisierung eines sicheren Fahrverhaltens, beispielsweise im Leerzustand, im Allgemeinen mit einem zusätzlichen Stickstoffpolster versehen werden müssen, was zu einer entsprechend aufwändigen Konstruktion und damit unter Umständen zu erhöhten Kosten führt.

Schließlich führt der Einsatz hydraulisch regulierbarer Achsbaugruppen im Allgemeinen zu einer hohen Beanspruchung der von diesen befahrenen Straßen bzw. Brücken, was insbesondere auf öffentlich genutzten Straßen mit hohem Verkehrsaufkommen unerwünschte Folgen nach sich ziehen kann.

Die Druckschrift US 2010/133764 A1 offenbart eine Achsbaugruppe gemäß dem Oberbegriff des Anspruchs 1, welche sich zum Ziel gesetzt hat, eine Fahrwerkshöhenverstellung bereitzustellen. Ferner sei auf die Druckschriften DE20 2005 020640 U1, US 3 049 361 A und DE 27 13 331 A1 hingewiesen.

Es ist daher Aufgabe der Erfindung eine diesbezüglich verbesserte Achsbaugruppe bzw. ein diesbezüglich verbessertes Schwerlastfahrzeug bereitzustellen.

Diese Aufgabe wird gemäß einem ersten Gesichtspunkt der Erfindung durch eine Achsbaugruppe nach Anspruch 1 gelöst.

Das Vorsehen eines pneumatisch betätigbaren Kraftgeräts an der erfindungsgemäßen Achsbaugruppe, welche vorzugsweise mit Druckluft oder einem anderen geeigneten gasförmigen Druckmedium betrieben werden kann, weist insbesondere den Vorteil auf, dass eine Undichtigkeit des pneumatisch betätigbaren Kraftgeräts im Allgemeinen weder zu einer Beeinträchtigung der Umwelt, noch zu potentiellen Gefahren für weitere Verkehrsteilnehmer führt, da in einem Störfall lediglich das gasförmige Medium in die Umgebung entweichen kann. Darüber hinaus weist die erfindungsgemäße Achsbaugruppe gegenüber bekannten hydraulischen Achsbaugruppen einen reduzierten Wartungsbedarf und damit reduzierte Wartungskosten auf, da kein regelmäßiger Austausch von Betriebsfluid erforderlich ist.

Wird die erfindungsgemäße Achsbaugruppe mit Luft betrieben, so versteht sich von selbst, dass diese als Betriebsmedium in der Regel in nahezu unbegrenzter Menge und kostenlos zur Verfügung steht. Darüber hinaus brauchen in diesem Fall keinerlei Rückführungsleitungen zu einem Speicher für dem pneumatisch betätigbaren Kraftgerät überschüssig zugeführte Luft vorgesehen werden, da diese bei Bedarf direkt an die Umgebung abgegeben werden kann.

Es ist darüber hinaus für den Fachmann ersichtlich, dass die erfindungsgemäße Achsbaugruppe aufgrund ihrer pneumatischen Betätigung im Allgemeinen ein gegenüber hydraulisch betätigten Achsbaugruppen reduziertes Eigengewicht aufweist. Letzteres ist dabei unter anderem auf die gegenüber Hydrauliksystemen deutlich geringeren Betriebsdrücke und damit weniger massiv auszulegenden Komponenten zurückzuführen. Hierdurch lassen sich bei einem vorgegebenen zulässigen Gesamtgewicht des Schwerlastanhängers eine erhöhte Zuladung und somit wesentliche wirtschaftliche Vorteile erzielen. Zudem weist die erfindungsgemäße Achsbaugruppe besonders straßen- und brückenschonende Eigenschaften auf.

Aufgrund der Tatsache, dass sich das pneumatisch betätigbare Kraftgerät erfindungsgemäß einenends an dem Drehgestell oder einem mit diesem verbundenen Teil und andernends an der Schwinge oder einem mit dieser verbundenen Teil abstützt, kann darüber hinaus ein Bauraumkonzept realisiert werden, bei welchem auch bei vergleichsweise großen Abmessungen des pneumatisch betätigbaren Kraftgeräts ein hoher maximaler Lenkwinkel um die im Wesentlichen vertikal verlaufende Lenkdrehachse des Drehlagers erzielbar ist. So führt eine derartige Anordnung des pneumatisch betätigbaren Kraftgeräts zu keiner wesentlichen Bewegungseinschränkung der Achsbaugruppe um die Lenkdrehachse, da sich das Kraftgerät stets mit dem Drehgestell bzw. der Schwinge mitdrehen kann und nicht etwa einenends fest mit einem Rahmen oder einem mit diesen verbunden Teil eines Schwerlastfahrzeugs verbunden ist, so wie dies beispielsweise bei achsschenkelgelenkten Achsbaugruppen der Fall sein kann. Der maximale Lenkwinkel der erfindungsgemäßen Achsbaugruppe kann dabei wenigstens ± 35°, vorzugsweise wenigstens ± 45° betragen. Ein derartig groß bemessener maximaler Lenkwinkel führt im Allgemeinen zu einem reduzierten Reifenverschleiß sowie einer zusätzlichen Schonung des Straßenbelages, was nicht nur umweltschonende, sondern auch wirtschaftliche Vorteile zur Folge hat.

Um auch bei einer Fahrt durch unebenes Gelände eine vorteilhafte Lastverteilung auf vorzugsweise alle Räder der Achsbaugruppe sicherstellen zu können, wird erfindungsgemäß vorgeschlagen, dass der Radträger an der Schwinge eine zur Längserstreckungsrichtung der Schwinge im Wesentlichen parallel verlaufende Schwenkachse schwenkbar angebracht ist. Bei dieser Erfindung kann es sich beispielsweise um eine sogenannte "Pendelachsen-Achsbaugruppe" handeln. Ein durch eine Schwenkbewegung des Radträgers an der Schwinge erzeugter Schwenkwinkel, welcher sich auch als "Pendelwinkel" bezeichnen lässt, kann dabei wenigstens ±8°, vorzugsweise wenigstens ±15° betragen.

Im Allgemeinen kann die erfindungsgemäße Achsbaugruppe als eine reibungsgelenkte Achsbaugruppe ausgestaltet sein. Ist die Achsbaugruppe jedoch für einen Einsatz bestimmt, bei welchem eine Zwangslenkung derselben bevorzugt ist, kann das Drehgestell ferner einen diesem zugeordneten Lenkhebel umfassen, welcher mit dem Ziel des Lenkens der Achsbaugruppe dazu angeordnet und bestimmt ist, auf das Drehgestell eine dieses Drehgestell um die Lenkdrehachse drehende Lenkkraft auszuüben. An dieser Stelle sei lediglich aus Gründen der Vollständigkeit darauf hingewiesen, dass es durchaus denkbar ist, an ein und demselben Schwerlastfahrzeug sowohl derartige reibungsgelenkte als auch zwangsgelenkte Achsbaugruppen vorzusehen.

Grundsätzlich wäre es denkbar das pneumatisch betätigbare Kraftgerät als einen Pneumatikzylinder mit einer Zylinder-Kolben-Anordnung auszubilden. Gemäß einer besonders leichtbauenden und zugleich kostengünstigen Ausführungsform der erfindungsgemäßen Achsbaugruppe wird jedoch vorgeschlagen, dass das pneumatisch betätigbare Kraftgerät als Pneumatikbalg ausgebildet ist. Der Pneumatikbalg kann dabei vorzugsweise von einer der Achsbaugruppe zugeordneten Drucklufterzeugungseinrichtung mit Druckluft beaufschlagt werden, so dass sich in Abhängigkeit eines Betriebsdrucks des Pneumatikbalgs und der auf die Achsbaugruppe einwirkenden Last ein entsprechender Schwenkwinkel zwischen der Schwinge und dem Drehgestell einstellt.

Gemäß einer ersten Ausführungsalternative, nicht Teil der Erfindung, kann der Radträger an einem freien Ende der Schwinge angeordnet sein, welches entgegensetzt zu einem mit dem Drehgestell schwenkbar verbundenen Ende der Schwinge vorgesehen ist, wobei das pneumatisch betätigbare Kraftgerät bezogen auf die Vorwärtsfahrtrichtung vorzugsweise vor der Lenkdrehachse des Drehlagers angeordnet ist. Grundsätzlich kann bereits hierdurch eine kompakte sowie montagefreundliche Ausgestaltung der Achsbaugruppe erzielt werden, mit welcher sich zudem ein beachtlicher Einstellbereich des sich zwischen der Schwinge und dem Drehgestell ergebenden Schwenkwinkels und somit gegebenenfalls einer Ladehöhe eines Schwerlastfahrzeugs mit einer derartigen Achsbaugruppe erzielen lässt.

Um für die Auslegung des pneumatisch betätigbaren Kraftgeräts eine erhöhte Gestaltungsfreiheit bereitstellen zu können, wird gemäß einer Weiterbildung der ersten Ausführungsalternative vorgeschlagen, dass sich das der Schwinge zugeordnete Ende des pneumatisch betätigbaren Kraftgeräts an einem mit der Schwinge betriebsfest verbundenen und von dieser, vorzugsweise im Wesentlichen orthogonal, abstehenden Umlenkhebel abstützt. Auf diese Weise kann insbesondere ein sich zwischen dem an dem Radträger drehbar gelagerten Rad und dem pneumatisch betätigbaren Kraftgerät ergebender Bauraumkonflikt gezielt umgangen werden.

Handelt es sich bei einer Achsbaugruppe gemäß der ersten Ausführungsalternative zudem um eine vorstehend erläuterte Pendelachsen-Achsbaugruppe, so kann der Radträger eine Lagereinheit umfassen, welche in einer Umfangsrichtung der Lagereinheit einstückig ausgebildete Lagerringe umfasst, welche für eine axiale Lagermontage auf der Schwinge eingerichtet sind. Gemäß dieser Ausführungsform der vorliegenden Erfindung wird folglich eine besonders einfache Montage des Radträgers ermöglicht, indem dieser samt seiner zugehörigen Lagereinheit, vorzugsweise im zusammengebauten Zustand, an der Schwinge montiert werden kann.

Erfindungsgemäß ist der Radträger an einem Abschnitt der Schwinge angeordnet, der zwischen einem freien Ende der Schwinge und deren mit dem Drehgestell schwenkbar verbundenen Ende gelegen ist, und sich das pneumatisch betätigbare Kraftgerät an dem freien Ende der Schwinge oder diesem freien Ende benachbart an der Schwinge abstützen, wobei das pneumatisch betätigbare Kraftgerät bezogen auf die Vorwärtsfahrtrichtung vorzugsweise hinter der Lenkdrehachse des Drehlagers angeordnet ist. Hierbei kann sich aufgrund eines erhöhten Abstandes des Krafteinleitungsortes des pneumatisch betätigbaren Kraftgeräts auf die Schwinge, bezogen auf das schwenkbar mit dem Drehgestell verbundene Ende der Schwinge, eine besonders günstige Hebelwirkung ergeben, so dass das pneumatisch betriebene Kraftgerät im Vergleich zu der Achsbaugruppe gemäß der ersten Ausführungsalternative mit vergleichsweise niedrigeren Kräften betreibbar ist, um ein die Schwinge bzw. den Radträger stützendes Drehmoment zu erzielen.

Handelt es sich bei einer erfindungsgemäßen Achsbaugruppe zudem um eine vorstehend erläuterte Pendelachsen-Achsbaugruppe, so kann der Radträger zur Sicherstellung einer fertigungsgerechten Montage eine Lagereinheit umfassen, welche in einer Umfangsrichtung der Lagereinheit teilbare Lagerringe umfasst, welche für eine radiale Lagermontage auf der Schwinge eingerichtet sind.

Um darüber hinaus auch bei schwerster Beladung einen ordnungsgemäßen Betrieb der erfindungsgemäßen Achsbaugruppe zu ermöglichen, kann das pneumatisch betätigbare Kraftgerät einen Betriebsdruck von höchstens 16 bar, vorzugsweise von höchstens 8,5 bar, noch bevorzugter von höchstens 4bar aufweisen. Ist ein Betriebsdruck von höchstens 16 bar bereitzustellen, so kann an dem erfindungsgemäßen Schwerlastfahrzeug ferner eine diesen Betriebsdruck bereitstellende Druckerzeugungseinrichtung vorgesehen sein. Weist der Betriebsdruck jedoch nur höchstens 8,5 bar auf, ist es beispielsweise denkbar, diesen Betriebsdruck in einfacher Weise von einem dem Schwerlastfahrzeug zugeordneten Zugfahrzeug zuzuführen. Bei einem Betriebsdruck von nur höchstens 4 bar, kann zudem ein besonders kosteneffizient ausgeführtes pneumatisch betätigbares Kraftgerät eingesetzt werden.

Damit die erfindungsgemäße Achsbaugruppe ferner eine zufriedenstellende Anpassung der Ladehöhe ermöglicht, sei es für einen Be- oder einen Entladevorgang, zur Überwindung von Hindernissen auf einer Transportstrecke oder zur Einhaltung gesetzlicher Vorschriften, kann die Achsbaugruppe ferner einen Arbeitshub von wenigstens 180 mm, vorzugsweise von wenigstens 400 mm, noch bevorzugter von wenigstens 600 mm aufweisen. Der Arbeitshub kann dabei durch einen durch eine Schwenkbewegung der Schwinge relativ zu dem Drehgestell verursachten Maximalbetrag einer möglichen Verlagerung des Rades, insbesondere des Radmittelpunktes, relativ zu dem Drehlager definiert sein.

Zur Gewährleistung eines verkehrssicheren Fahrverhaltens und zur Vermeidung eines während der Fahrt auftretenden, übermäßigen Aufschwingens der Achsbaugruppe ist es in Weiterbildung der Erfindung zudem denkbar, dass die Achsbaugruppe ferner wenigstens eine Schwenkbewegung zwischen der Schwinge und dem Drehgestell dämpfende Dämpfungseinrichtung umfasst. Diese Dämpfungseinrichtung kann beispielsweise als Zylinder-Kolben-Anordnung ausgebildet sein, wobei das eine Ende der Zylinder-Kolben-Anordnung drehbar mit der Schwinge und das jeweils andere Ende der Zylinder-Kolben-Anordnung drehbar mit dem Drehgestell verbunden ist. Hierbei kann beispielsweise ein für Schwerlastanwendungen geeigneter, handelsüblicher Hydraulikdämpfer vorgesehen werden.

Zur Einleitung einer ordnungsgemäßen Verzögerungskraft kann die Achsbaugruppe schließlich noch einen Bremszylinder umfassen, der mit einer, vorzugsweise in dem Radträger aufgenommenen, Bremseinrichtung verbunden ist.

Schließlich kann gemäß einer weiteren Ausführungsform der Erfindung der Radträger zwei in Bezug auf die Schwinge entgegengesetzte Enden aufweisen, an welchen jeweils ein um die Raddrehachse drehbar gelagertes Rad angebracht ist. Letztere kann nicht nur zu einer besseren Verteilung der auf den Radträger wirkenden Last dienen, sondern auch zu einer Erhöhung der maximal zulässigen Achslast der Achsbaugruppe beitragen, welche gemäß einiger nationaler Vorschriften durch die Anzahl der Radspuren einer Achsbaugruppe bzw. einer Achslinie eines Schwerlastfahrzeugs bestimmt wird.

Wie bereits eingangs erwähnt, betrifft die Erfindung gemäß einem weiteren Gesichtspunkt zudem ein Schwerlastfahrzeug mit wenigstens einer Achsbaugruppe nach einem der vorhergehenden Ansprüche. Hinsichtlich der Vorteile dieses Schwerlastfahrzeugs sei auf die vorstehende Diskussion der erfindungsgemäßen Achsbaugruppe verwiesen.

Die Erfindung wird im Folgenden anhand der beigefügten Zeichnung an einigen Ausführungsbeispielen näher erläutert werden. Es stellen dar:
- Figuren 1a und 1b: eine isometrische bzw. eine Seitenansicht einer ersten beispielhaften Ausführungsform einer Achsbaugruppe, welche als eine Pendelachsen-Achsbaugruppe ausgebildet ist;
- Figuren 2a und 2b: eine isometrische bzw. eine Seitenansicht einer erfindungsgemäßen Achsbaugruppe, welche als eine Pendelachsen-Achsbaugruppe ausgebildet ist;
- Figur 3: eine Teilansicht eines nicht erfindungsgemäßen Schwerlastfahrzeugs, mit Achsbaugruppen gemäß der ersten beispielhaften Ausführungsform; und
- Figur 4: eine Teilansicht eines erfindungsgemäßen Schwerlastfahrzeugs mit erfindungsgemäßen Achsbaugruppen.

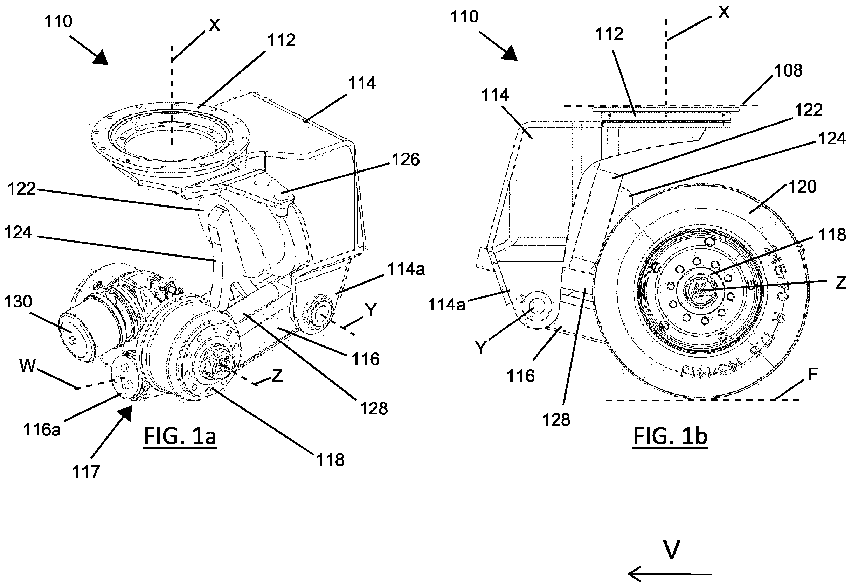

Mit Bezug auf die Figuren 1a und 1b umfasst die beispielhaft als Pendelachsen-Achsbaugruppe ausgebildete Achsbaugruppe 110 ein Drehlager 112 mit einer im Wesentlichen vertikal verlaufenden Lenkdrehachse X, ein mit dem Drehlager 112 fest verbundenes Drehgestell 114, an dessen freiem Ende 114a eine Schwinge 116 um eine im Wesentlichen horizontal verlaufende Schwenkachse Y schwenkbar angeordnet ist, und einen Radträger 118, der an dem freien Ende 116a der Schwinge 116 um eine Schwenkachse W schwenkbar angeordnet ist. Zur Realisierung dieser um die Schwenkachse W schwenkbaren Anordnung umfasst der Radträger 118 eine Lagereinheit 117, welche in einer Umfangsrichtung der Lagereinheit 117 einstückig ausgebildete Lagerringe umfasst, welche für eine axiale, im Wesentlichen parallel zur Schwenkachse W verlaufende Lagermontage eingerichtet sind. Der Radträger 118 umfasst darüber hinaus an diesem um eine Raddrehachse Z drehbar gelagerte Räder 120, wobei die Räder 120 nur in der Figur 1b dargestellt sind und in der Figur 1a lediglich aus Übersichtsgründen weggelassen worden sind. Ferner ist ein zwischen dem Drehgestell 114 und der Schwinge 116 wirkender Pneumatikbalg 122 vorgesehen, welcher, vorzugsweise von einer nicht dargestellten Drucklufterzeugungseinrichtung, pneumatisch betätigt bzw. mit Druckluft beaufschlagt werden kann und sich einenends an dem Drehgestell 114 und andernends an einem mit der Schwinge 116 betriebsfest verbundenen Umlenkhebel 124 abstützt, welcher im Wesentlichen orthogonal von der Schwinge 116 absteht, so dass ein sich zwischen der Schwinge 116 und dem Drehgestell 114 einstellender Schwenkwinkel beeinflusst werden kann. Der Pneumatikbalg 122 ist dabei in einer Vorwärtsfahrtrichtung V der Achsbaugruppe 110 vor der Lenkdrehachse X des Drehlagers 112 angeordnet.

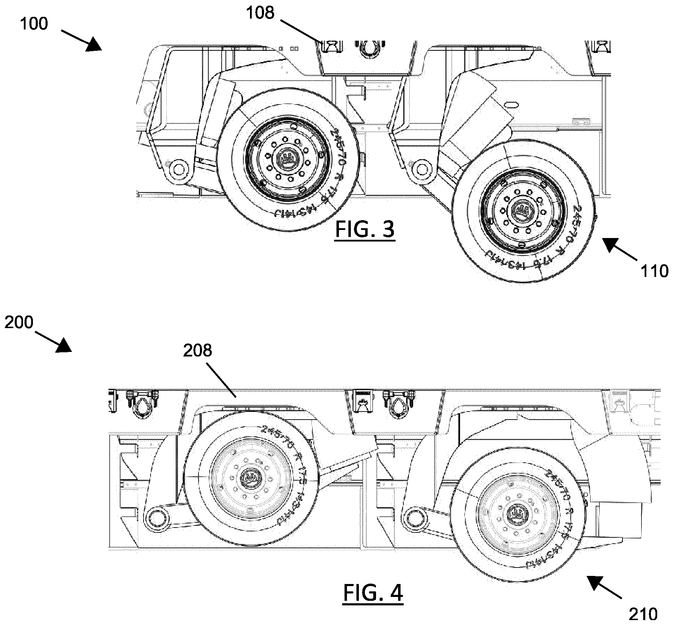

Mit Bezugnahme auf Figur 3, welche eine Teilansicht eines Schwerlastfahrzeugs 100 mit Achsbaugruppen 110 darstellt, können die Räder 120 somit in verschiedenen Abständen zu einem Rahmen 108 des Schwerlastfahrzeugs 100 verstellt werden. Der letztgenannte Rahmen 108 ist ebenfalls in Figur 1b schematisch angedeutet. Somit lassen sich beispielsweise eine gewünschte Ladehöhe des Schwerlastfahrzeugs 100 einstellen und/oder Unebenheiten einer in Fig. 1b schematisch angedeuteten Fahrbahn F ausgleichen.

Wie ebenfalls in Figur 1a erkennbar, umfasst die Achsbaugruppe 110 ferner einen dem Drehgestell 114 zugeordneten Lenkhebel 126, welcher dazu angeordnet und bestimmt ist, eine das Drehgestell 114 um die Lenkdrehachse X drehende Lenkkraft auf das Drehgestell 114 auszuüben. Der Lenkhebel 126 kann dabei mit einer in der Fig. 1a nicht dargestellten Lenkkrafterzeugungseinrichtung verbunden sein. Darüber hinaus ist zwischen der Schwinge 116 und dem Drehgestell 114 eine Dämpfungseinrichtung 128 angeordnet, welche in dem dargestellten Ausführungsbeispiel als zwei Zylinder-Kolben-Anordnungen 128 ausgebildet ist, um eine Schwenkbewegung zwischen der Schwinge 116 und dem Drehgestell 114 derart zu dämpfen, dass ein sicheres Fahrverhalten der Achsbaugruppe 110 bzw. des Schwerlastfahrzeugs 100 gewährleistet werden kann. Ein Ende der Zylinder-Kolben-Anordnung 128 ist dabei drehbar mit der Schwinge 116 das jeweils andere Ende der Zylinder-Kolben-Anordnung 128 drehbar mit dem Drehgestell 114 verbunden. Schließlich umfasst der Radträger 118 noch einen Bremszylinder 130, welcher mit einer in Fig. 1a nicht näher dargestellten Bremseinrichtung verbunden ist, welche in dem Radträger 118 derart aufgenommen ist, dass sie eine Drehbewegung des Radträgers um die Achse Z abzubremsen vermag.

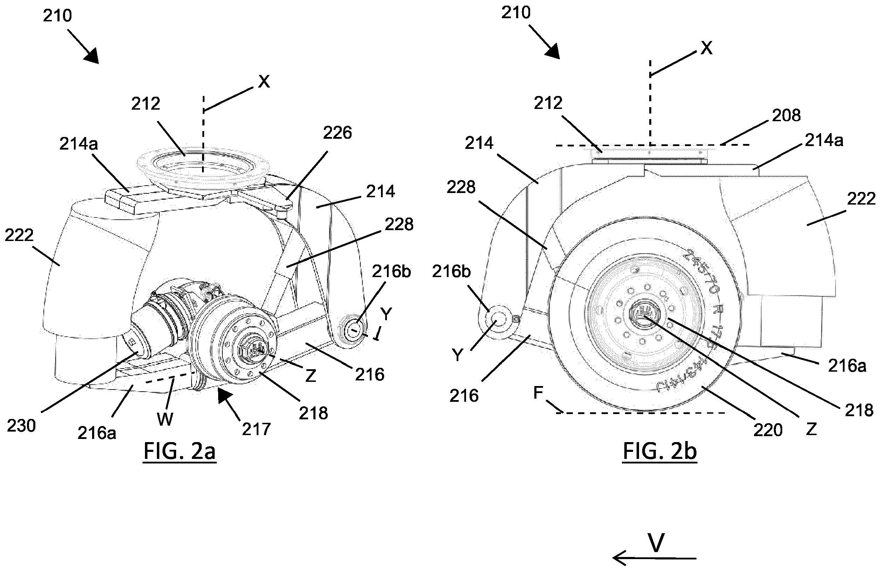

In den Figuren 2a und 2b sowie der Figur 4 sind eine erfindungsgemäße Achsbaugruppe 210 bzw. ein erfindungsgemäßes Schwerlastfahrzeug 200 dargestellt. Die Achsbaugruppe 210 ist ebenfalls als eine Pendelachsen-Achsbaugruppe ausgeführt. Darin sind analoge Teile mit den gleichen Bezugszeichen versehen wie in den Figuren 1a und 1b, jedoch vermehrt um die Zahl 100. Darüber hinaus wird die Ausführungsform der Figuren 2a und 2b im Folgenden nur insoweit beschrieben werden, als sie sich von der Ausführungsform der Figuren 1a und 1b unterscheidet, auf deren Beschreibung hiermit ansonsten ausdrücklich verwiesen sei.

Wie in Fig. 2a erkennbar, ist der Radträger 218 der Achsbaugruppe 210 an einem Abschnitt der Schwinge 216 angeordnet, der zwischen dem freien Ende 216a der Schwinge 216 und deren mit dem Drehgestell 214 schwenkbar verbundenen Ende 216b gelegen ist. Erfindungsgemäß stützt sich der Pneumatikbalg 222 an dem freien Ende 216a der Schwinge 216 und an einem diesem gegenüberliegenden Ende 214a des Drehgestells 214 ab und ist bezogen auf die Vorwärtsfahrtrichtung V der Achsbaugruppe 210 hinter der Lenkdrehachse X des Drehlagers 212 angeordnet. Aufgrund der vorstehend erläuterten Anordnung des Pneumatikbalgs 222 kann das Drehgestell 214 gemäß dem zweiten Ausführungsbeispiel, vorzugsweise in einer im Wesentlichen parallel zu der Schwenkachse Y verlaufenden Erstreckungsrichtung, schmaler als das Drehgestell 114 ausgebildet sein, da kein zusätzlicher Bauraum für ein Unterbringen des Pneumatikbalgs 222 innerhalb eines in Vorwärtsfahrtrichtung V vor der Lenkdrehachse X angeordneten Abschnitts des Drehgestells 214 vorgesehen zu werden braucht.

Mit Bezugnahme auf Figur 4, welche eine Teilansicht eines erfindungsgemäßen Schwerlastfahrzeugs 200 mit erfindungsgemäßen Achsbaugruppen 210 darstellt, können die Räder 220 somit in ähnlicher Weise in verschiedenen Abständen zu dem Rahmen 208 des Schwerlastfahrzeugs 200 verstellt bzw. Unebenheiten der Fahrbahn F entsprechend ausgeglichen werden.

Um eine Schwenkbewegung des in den Fig. 2a bzw. 2b dargestellten Radträgers 218 um die Schwenkachse W zu ermöglichen, umfasst der Radträger 218 eine Lagereinheit 217, welche in einer Umfangsrichtung der Lagereinheit 217 teilbare Lagerringe umfasst, welche für eine, bezogen auf die Schwenkachse W, radiale Lagermontage auf der Schwinge 216 eingerichtet sind. Alternativ zu der in den Fig. 2a bzw. 2b dargestellten Ausführungsform kann jedoch auch umgekehrt vorgesehen sein, dass die Schwinge zweiteilig ausgebildet ist und die Lagereinheit entsprechend in Umfangsrichtung einteilig ausgebildete Lagerringe umfasst, so dass beispielsweise die Lagereinheit wiederum in im Wesentlichen parallel zur Schwenkachse W verlaufender Richtung an einem ersten Teil der Schwinge, vorzugsweise einem mit dem Drehgestell 214 schwenkbar verbundenen Teil, montiert werden kann und im Anschluss daran oder zeitgleich der jeweils andere Teil der Schwinge an der entgegengesetzten Seite der Lagereinheit montierbar ist.

Schließlich umfasst die Achsbaugruppe 210 noch die Dämpfungseinrichtung 228, welche als eine einzige Zylinder-Kolben-Anordnung 228 ausgebildet ist.

## Patentansprüche

1. Achsbaugruppe (210), welche dazu ausgebildet und bestimmt ist, bei einem Schwerlastfahrzeug (200) eingesetzt zu werden, die Achsbaugruppe umfassend:
• ein Drehlager (212) mit einer im Wesentlichen vertikal verlaufenden Lenkdrehachse (X),
• ein um die Lenkdrehachse (X) drehbar angeordnetes Drehgestell ( 214),
• eine an dem Drehgestell (214) um eine im Wesentlichen horizontal verlaufende Schwenkachse (Y) schwenkbar angebrachte Schwinge (216),
• einen mit der Schwinge (216) betriebsmäßig verbundenen Radträger (218) mit wenigstens einem daran um eine Raddrehachse (Z) drehbar gelagerten Rad (220), wobei die Raddrehachse (Z) im Wesentlichen horizontal und bei Geradeausfahrt im Wesentlichen quer zur Fahrtrichtung (V) verläuft, und
• ein pneumatisch betätigbares Kraftgerät (222), welches sich einenends an dem Drehgestell (214) oder einem mit diesem verbundenen Teil und andernends an der Schwinge (216) oder einem mit dieser verbundenen Teil abstützt,
wobei der Radträger (218) an einem Abschnitt der Schwinge (216) angeordnet ist, der zwischen einem freien Ende (216a) der Schwinge (216) und deren mit dem Drehgestell schwenkbar verbundenen Ende (216b) gelegen ist, und sich das pneumatisch betätigbare Kraftgerät (222) an dem freien Ende (216a) der Schwinge (216) oder diesem freien Ende benachbart an der Schwinge (216) abstützt,
**dadurch gekennzeichnet, dass** der Radträger (218) an der Schwinge (216) um eine zur Längserstreckungsrichtung der Schwinge (216) im Wesentlichen parallel verlaufende Schwenkachse (W) schwenkbar angebracht ist.

2. Achsbaugruppe nach Anspruch 1,
**dadurch gekennzeichnet, dass** das Drehgestell (214) einen diesem zugeordneten Lenkhebel (226) umfasst, welcher mit dem Ziel des Lenkens der Achsbaugruppe (210) dazu angeordnet und bestimmt ist, auf das Drehgestell (214) eine dieses Drehgestell (214) um die Lenkdrehachse (X) drehende Lenkkraft auszuüben.

3. Achsbaugruppe nach einem der vorhergehenden Ansprüche,
**dadurch gekennzeichnet, dass** das pneumatisch betätigbare Kraftgerät (222) als Pneumatikbalg ausgebildet ist.

4. Achsbaugruppe nach einem der Ansprüche 1 bis 3,
**dadurch gekennzeichnet, dass** das pneumatisch betätigbare Kraftgerät (222) bezogen auf die Vorwärtsfahrtrichtung (V)hinter der Lenkdrehachse (X) des Drehlagers (212) angeordnet ist.

5. Achsbaugruppe nach Anspruch 4,
**dadurch kennzeichnet, dass** der Radträger (218) eine Lagereinheit (217) umfasst, welche in einer Umfangsrichtung der Lagereinheit (217) teilbare Lagerringe umfasst, welche für eine radiale Lagermontage auf der Schwinge (216) eingerichtet sind.

6. Achsbaugruppe nach einem der vorhergehenden Ansprüche,
**dadurch gekennzeichnet, dass** das pneumatisch betätigbare Kraftgerät (222) einen Betriebsdruck von höchstens 16 bar, vorzugsweise von höchstens 8,5 bar, noch bevorzugter von höchstens 4 bar aufweist oder/und dass die Achsbaugruppe (210) einen Arbeitshub von wenigstens 180 mm, vorzugsweise von wenigstens 400 mm, noch bevorzugter von wenigstens 600 mm aufweist.

7. Achsbaugruppe nach einem der vorhergehenden Ansprüche,
**dadurch gekennzeichnet, dass** sie ferner wenigstens eine eine Schwenkbewegung zwischen der Schwinge (216) und dem Drehgestell (214) dämpfende Dämpfungseinrichtung (228) umfasst.

8. Achsbaugruppe nach Anspruch 7,
**dadurch gekennzeichnet, dass** die Dämpfungseinrichtung (228) als Zylinder-Kolben-Anordnung ausgebildet ist, wobei das eine Ende der Zylinder-Kolben-Anordnung drehbar mit der Schwinge (216) und das jeweils andere Ende der Zylinder-Kolben-Anordnung drehbar mit dem Drehgestell (214) verbunden ist.

9. Achsbaugruppe nach einem der vorhergehenden Ansprüche,
**dadurch gekennzeichnet, dass** sie ferner einen Bremszylinder (230) umfasst, der mit einer, vorzugsweise in dem Radträger (218) aufgenommenen, Bremseinrichtung verbunden ist.

10. Achsbaugruppe nach einem der vorhergehenden Ansprüche,
**dadurch gekennzeichnet, dass** der Radträger (218) zwei in Bezug auf die Schwinge (216) entgegengesetzte Enden aufweist, an welchen jeweils ein um die Raddrehachse (Z) drehbar gelagertes Rad (220) angebracht ist.

11. Schwerlastfahrzeug (200) mit wenigstens einer Achsbaugruppe (210) nach einem der vorhergehenden Ansprüche.

## Claims

1. An axle assembly (210) which is designed and intended to be used in a heavy-duty vehicle (200), the axle assembly comprising:
• a pivot bearing (212) having a substantially vertically extending steering axis of rotation (X),
• a bogie (214) rotatably arranged about the steering axis of rotation (X),
• a rocker (216) mounted on the bogie (214) so as to be pivotable about a substantially horizontally extending pivot axis (Y),
• a wheel carrier (218) operatively connected to the rocker (216) having at least one wheel (220) rotatably mounted thereon about a wheel axis of rotation (Z), the wheel axis of rotation (Z) extending substantially horizontally and, when driving straight ahead, substantially transversely to the direction of travel (V), and
• a pneumatically actuatable power device (222), which is supported at one end on the bogie (214) or on a part connected thereto and at the other end on the rocker (216) or on a part connected thereto,
wherein the wheel carrier (218) is arranged on a portion of the rocker (216) which is located between a free end (216a) of the rocker (216) and the end (216b) thereof pivotably connected to the bogie, and in that the pneumatically actuatable power device (222) is supported on the free end (216a) of the rocker (216) or on the rocker (216) adjacent to this free end,
**characterised in that** the wheel carrier (218) is pivotably attached to the rocker (216) about a pivot axis (W) extending substantially parallel to the longitudinal extension direction of the rocker (216).

2. The axle assembly according to claim 1,
**characterised in that** the bogie (214) comprises a steering lever (226) assigned thereto, which is arranged and intended for the purpose of steering the axle assembly (210) to exert a steering force on the bogie (214), which rotates said bogie (214) about the steering axis of rotation (X).

3. The axle assembly according to any of the preceding claims, **characterised in that** the pneumatically actuatable power device (222) is designed as a pneumatic bellows.

4. The axle assembly according to any of claims 1 to 3,
**characterised in that** the pneumatically actuatable power device (222) is arranged behind the steering axis of rotation (X) of the pivot bearing (212) relative to the forward direction of travel (V).

5. The axle assembly according claim 4,
**characterised in that** the wheel carrier (218) comprises a bearing unit (217), which comprises bearing rings which are separable in a circumferential direction of the bearing unit (217) and which are adapted for a radial bearing assembly on the rocker (216).

6. The axle assembly according to any of the preceding claims, **characterised in that** the pneumatically actuatable power device (222) has an operating pressure of no more than 16 bar, preferably of no more than 8.5 bar, more preferably of no more than 4 bar, and/or that the axle assembly (210) has a working stroke of at least 180 mm, preferably of at least 400 mm, more preferably of at least 600 mm.

7. The axle assembly according to any of the preceding claims, **characterised in that** it further comprises at least one damping device (228), which dampens the pivoting movement between the rocker (216) and the bogie (214).

8. The axle assembly according to claim 7,
**characterised in that** the damping device (228) is designed as a cylinder-piston arrangement, one end of the cylinder-piston arrangement being rotatably connected to the rocker (216) and the other end of the cylinder-piston arrangement being rotatably connected to the bogie (214).

9. The axle assembly according to any of the preceding claims, **characterised in that** it further comprises a brake cylinder (230), which is connected to a braking device accommodated preferably in the wheel carrier (218).

10. The axle assembly according to any of the preceding claims, **characterised in that** the wheel carrier (218) has two opposite ends with respect to the rocker (216), at each of which a wheel (220) rotatably mounted about the wheel axis of rotation (Z) is attached.

11. A heavy-duty vehicle (200) having at least one axle assembly (210) according to any of the preceding claims.

## Revendications

1. Ensemble d'essieu (210) conçu et destiné à être utilisé sur un véhicule poids lourd (200), l'ensemble d'essieu comprenant :
• un palier de rotation (212) avec un axe de rotation de direction (X) s'étendant principalement verticalement,
• un bogie ( 214) disposé de manière à pouvoir tourner autour de l'axe de rotation de direction (X),
• un bras oscillant (216) monté sur le bogie (214) de manière à pouvoir pivoter autour d'un axe de pivotement (Y) s'étendant principalement horizontalement,
• un support de roue (218) relié en fonctionnement au bras oscillant (216) avec au moins une roue (220) montée sur celui-ci de manière à pouvoir tourner autour d'un axe de rotation de roue (Z), l'axe de rotation de roue (Z) s'étendant principalement horizontalement et, en cas de déplacement en ligne droite, principalement transversalement par rapport à la direction de déplacement (V), et
• un appareil de force à commande pneumatique (222), qui s'appuie à une extrémité sur le bogie (214) ou sur une pièce reliée à celui-ci et à l'autre extrémité sur le bras oscillant (216) ou sur une pièce reliée à celui-ci,
dans lequel le support de roue (218) est disposé sur une partie du bras oscillant (216) qui est située entre une extrémité libre (216a) du bras oscillant (216) et de son extrémité (216b) reliée de manière pivotante au bogie,
et l'appareil de force à commande pneumatique (222) s'appuie sur l'extrémité libre (216a) du bras oscillant (216) ou sur cette extrémité libre adjacente au bras oscillant (216), **caractérisé en ce que** le support de roue (218) est monté sur le bras oscillant (216) de manière à pouvoir pivoter autour d'un axe de pivotement (W) s'étendant principalement parallèlement à la direction d'extension longitudinale du bras oscillant (216).

2. Ensemble d'essieu selon la revendication 1, **caractérisé en ce que** le bogie (214) comprend un levier de direction (226) qui lui est associé et qui, dans le but de diriger l'ensemble d'essieu (210), est disposé et destiné à exercer sur le bogie (214) une force de direction faisant tourner ce bogie (214) autour de l'axe de rotation de direction (X).

3. Ensemble d'essieu selon l'une quelconque des revendications précédentes, **caractérisé en ce que** l'appareil de force à commande pneumatique (222) est conçu comme un soufflet pneumatique.

4. Ensemble d'essieu selon l'une des revendications 1 à 3, **caractérisé en ce que** l'appareil de force à commande pneumatique (222) est disposé derrière l'axe de rotation de direction (X) du palier de rotation (212) par rapport au sens de marche avant (V).

5. Ensemble d'essieu selon la revendication 4, **caractérisé en ce que** le support de roue (218) comprend une unité de palier (217) qui comprend des bagues de palier séparables dans une direction circonférentielle de l'unité de palier (217), qui sont adaptées pour un montage de palier radial sur le bras oscillant (216).

6. Ensemble d'essieu selon l'une des revendications précédentes, **caractérisé en ce que** l'appareil de force à commande pneumatique (222) a une pression de fonctionnement d'au plus 16 bars, de préférence d'au plus 8,5 bars, plus préférentiellement d'au plus 4 bars et/ou **en ce que** l'ensemble d'essieu (210) a une course de travail d'au moins 180 mm, de préférence d'au moins 400 mm, plus préférentiellement d'au moins 600 mm.

7. Ensemble d'essieu selon l'une quelconque des revendications précédentes, **caractérisé en ce qu'**il comprend en outre au moins un dispositif d'amortissement (228) amortissant un mouvement de pivotement entre le bras oscillant (216) et le bogie (214).

8. Ensemble d'essieu selon la revendication 7, **caractérisé en ce que** le dispositif d'amortissement (228) est conçu comme un ensemble cylindre-piston, dans lequel une extrémité de l'ensemble cylindre-piston est reliée de manière rotative au bras oscillant (216) et l'autre extrémité de l'ensemble cylindre-piston est reliée de manière rotative au bogie (214).

9. Ensemble d'essieu selon l'une quelconque des revendications précédentes, **caractérisé en ce qu'**il comprend en outre un cylindre de frein (230), qui est relié à un dispositif de freinage, de préférence logé dans le support de roue (218).

10. Ensemble d'essieu selon l'une quelconque des revendications précédentes, **caractérisé en ce que** le support de roue (218) a deux extrémités opposées par rapport au bras oscillant (216), sur chacune desquelles est fixée une roue (220) montée rotative autour de l'axe de rotation (Z) de la roue.

11. Véhicule poids lourd (200) comportant au moins un ensemble d'essieu (210) selon l'une quelconque des revendications précédentes.
